# EUROPEAN PATENT SPECIFICATION

(11) **EP 1 493 480 B1**
(45) Date of publication and mention of the grant of the patent: **13.10.2010**
(21) Application number: 04015127.6
(22) Date of filing: 28.06.2004
(51) Int. Cl.: B01D 46/04, B01D 46/42

(54) **Filter cleaning assembly**
Vorrichtung zur Filterreinigung
Dispositif de nettoyage de filtre

(30) Priority: 03.07.2003 IT MO20030198
(43) Date of publication of application: 05.01.2005
(73) Proprietor: Autel S.R.L, 41049 Sassuolo (Prov. of Modena) (IT)
(72) Inventor: Schenetti, Mario, 41049 Sassuolo (Modena) (IT)
(74) Representative: Brogi, Graziano

(56) References cited:
- EP-A- 0 651 187
- WO-A-01/29465
- DE-A- 3 409 872

## Description

The present invention relates to a filter cleaning assembly.

It is known that filters of various kinds are widely used in the industrial sector to separate solid particles from a gas and in particular to recover air contaminated by waste dust.

For example, filters of the sleeve, cartridge and bag type are known.

Such filters are constituted by boxes that contain filtering elements which, when the stream of gas to be filtered passes, retain the solid particles to be separated, and are equipped with assemblies for cleaning the filtering elements that are suitable to restore their original filtering capacity, which gradually saturates during the operation of the devices.

For example, compressed-air cleaning assemblies are known which are substantially constituted by a tubular or spherical dome-shaped compressed-air tank and by a plurality of ducts for the outflow of said air, conventionally termed firing tubes, which are partially accommodated inside the tank and each have a first end that is connected to the tank by interposing a respective valve and a second end that protrudes from said tank and is suitable to be connected to the box in order to propel air onto the filtering elements.

The compressed air jet that strikes the filtering elements separates the solid particles retained by said elements, which collect by gravity on the bottom of the box.

Appropriate seals, suitable to avoid compressed air leaks, must be provided at the region where the tube exits from the tank and where the valve is attached to said tank.

In view of the particular convex shape of the outer surface of the tank, it has been necessary to study specific technical solutions in order to be able to ensure a good seal.

A first known method for providing said seals consists in welding to the outer surface of the tank, at said regions, respective flanges that are suitable to form flat coupling surfaces on which the seals are provided in a conventional manner.

This operating method therefore entails the need to perform welding on the tank and is rather onerous and difficult to perform.

In order to obviate these drawbacks, sealing units are also known which comprise a coupling that forms a hermetic seal with the valve, which is applied to the firing tube proximate to the first end, is provided with an annular seat for accommodating a first sealing element on the outer surface of the tank, and has a surface for hermetic coupling to said valve, and a washer, which is inserted on the second end of the firing tube, is locked in position by a threaded ring that is coupled to the tube and is provided with an annular groove for accommodating a second element for providing a seal between said tube and the tank.

Said groove is provided on the surface of the washer that is suitable to abut on the outer surface of the tank and at the central hole of said washer.

In a radial direction with respect to the firing tube, the second sealing element abuts against the groove on one side and, on the other side, on said tube, which is surrounded circumferentially by said element; in a longitudinal direction with respect to the firing tube, the second sealing element instead abuts against the groove on one side and, on the other side, on the portion of the outer surface of the tank that is arranged proximate to the hole for the passage of said tube.

Said sealing element thus provides simultaneously the seal between the tank and the washer and between said washer and the firing tube.

These known sealing assemblies are not free from drawbacks, including the fact that in order to ensure a good seal between the second sealing element and the outer surface of the tank, the outlet hole of the firing tube must be produced with a very low tolerance, and this complicates the execution of said sealing assemblies and increases their manufacturing costs.

Filter cleaning assemblies using a tank for storing a pressurized gas which is connected to a duct and which is provided with a valve for controlled release of the pressurized gas are disclosed in WO 01/29465 and DE 3409872.

A further filter cleaning assembly which corresponds to the preamble of present claim 1 is disclosed in EP 0651187.

The aim of the present invention is to eliminate the drawbacks noted above of the background art, by providing a filter cleaning assembly that allows to simplify the operations required to manufacture the sealing assemblies and reduces their manufacturing costs without penalizing the quality and durability of the seals provided.

Within this aim, an object of the present invention is to provide a filter cleaning assembly that is simple, relatively easy to provide in practice, safe in use, effective in operation, and has a relatively low cost.

This aim and these and other objects that will become better apparent hereinafter are achieved by the present filter cleaning assembly having all the features as provided by the main independent claim 1.

Further characteristics and advantages of the present invention will become better apparent from the following detailed description of a preferred but not exclusive embodiment of a filter cleaning assembly, illustrated by way of non limiting example in the accompanying drawings, wherein:

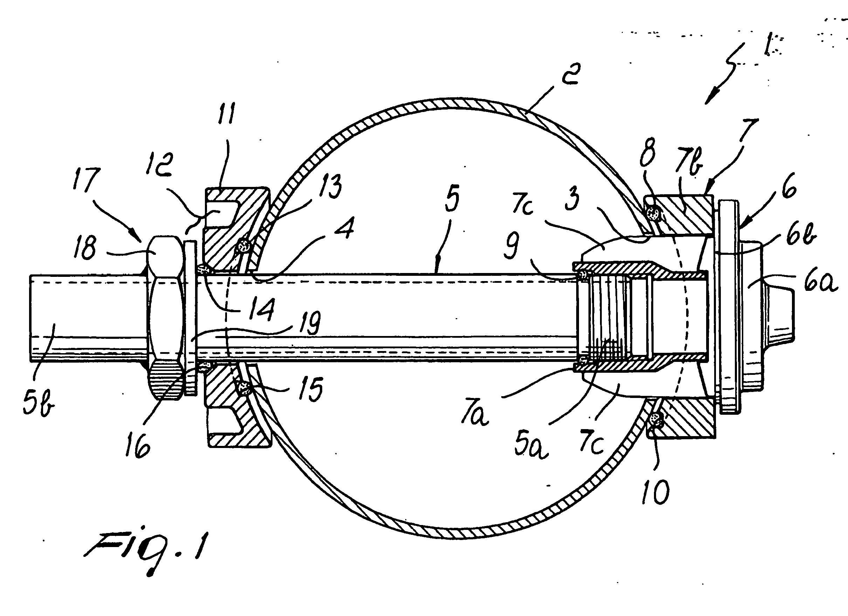

Figure 1 is a schematic sectional view of the cleaning assembly according to the invention, taken transversely with respect to the tank;
Figure 2 is a schematic perspective view of a possible embodiment of the assembly according to the invention, applied to a sleeve filter.

With reference to the figures, the reference numeral 1 generally designates a filter cleaning assembly.

The assembly 1 comprises a tank 2 for storing a pressurized gas, for example such as compressed air, which has a convex outer surface and is preferably tubular or shaped like a spherical dome.

The tank 2 is provided with at least one first opening 3 and at least one second opening 4, which are arranged at mutually diametrically opposite portions of said tank.

The assembly 1 further comprises at least one duct 5, which is partially inserted in the tank 2, is arranged diametrically with respect to said tank, and has a first end 5a, which is connected to the first opening 3 by the interposition of valve means 6 for the controlled dispensing of said gas, which are arranged externally to said tank, and a second end 5b, which protrudes from the second opening 4 and is associable with a filter F.

In the particular embodiment shown, the valve means 6 are constituted by a membrane valve, optionally associated with means for actuating its opening and closure of the electric or pneumatic type, which are not shown because they are of a known type.

The duct 5 is usually termed "firing tube" of the assembly 1.

The assembly 1 further comprises a body 7 for hermetically connecting the valve means 6 and the first end 5a, which is associated with the outer surface of the tank 2 proximate to the first opening 3 by the interposition of first sealing means 8.

The valve means 6 are provided with a cover 6a, which is associated hermetically with the connecting body 7, and with a membrane 6b, which is not shown in detail because it is of a conventional type, and is interposed between said body and the cover 6a.

The connecting body 7 is provided with an internally threaded central tang 7a, which lies inside the tank 2 and is coupled to the end portion of the duct 5 proximate to the first end 5a, said portion being threaded externally.

A sealing annular element 9 is interposed between the tang 7a and the duct 5.

The connecting body 7 further has an outer annular portion 7b, in which the surface that faces the tank 2 is shaped so as to duplicate the profile of said tank and on which there is an annular seat 10 for accommodating the first sealing means 8, which are preferably constituted by a first sealing annular element made of rubber or the like.

The tang 7a and the annular portion 7b are connected by a plurality of radial ribs 7c.

In the open configuration, the valve means 6 mutually connect the inside of the tank 2 and the first end 5a through the interstices between the radial ribs 7c.

In the closed configuration, the valve means 6 instead close the upper opening of the tang 7a, preventing the flow of the gas from the tank 2 to the duct 5.

Finally, the assembly 1 comprises a contoured annular element 11, which is fitted over the duct 5 at the second end 5b and is associated with a sealing assembly 12, which is interposed between the outer surface of the tank 2 and said duct.

The sealing assembly 12 comprises second sealing means 13, which are interposed between the contoured annular element 11 and the outer surface of the tank 2 proximate to the second opening 4, and third sealing means 14, which are interposed between said annular element and the duct 5.

The second sealing means 13 and the third sealing means 14 are preferably constituted by respective sealing annular elements made of rubber or the like.

In the contoured annular element 11, the surface that faces the tank 2 is shaped so as to duplicate the profile of said tank and is provided with an annular groove 15 for accommodating the second sealing means 13.

Advantageously, the groove 15 can be provided on said surface at any distance from the second opening 4.

The contoured annular element 11 is further provided with a seat 16, which is formed at the central hole of said annular element in order to accommodate the third sealing means 14.

In an alternative embodiment, not shown in the figures, the third sealing means 14 can be accommodated in a circumferential groove, which is formed on the duct 5 at the portion of said duct that is arranged along the central hole of the contoured annular element 11.

Conveniently, the second sealing means 13 prevent the seepage of pressurized gas tangentially to the tank 2, while the third sealing means 14 avoid leaks of compressed gas in an axial direction with respect to the duct 5.

The presence of the third sealing means 14 allows to arrange the second sealing means 13 so that they are spaced from the duct 5, which can thus be inserted with play in the second opening 4.

Finally, the assembly 1 is provided with means 17 for fastening the contoured annular element 11 on the tank 2; such means comprise a shoulder, which is rigidly coupled to the duct 5 and is associated with the contoured annular element 11 on the opposite side of said tank.

In the particular embodiment shown, said shoulder is formed by a ring 18, which is welded on the duct 5.

A washer 19 for protecting the third sealing means 14 is interposed between the contoured annular element 11 and the ring 18.

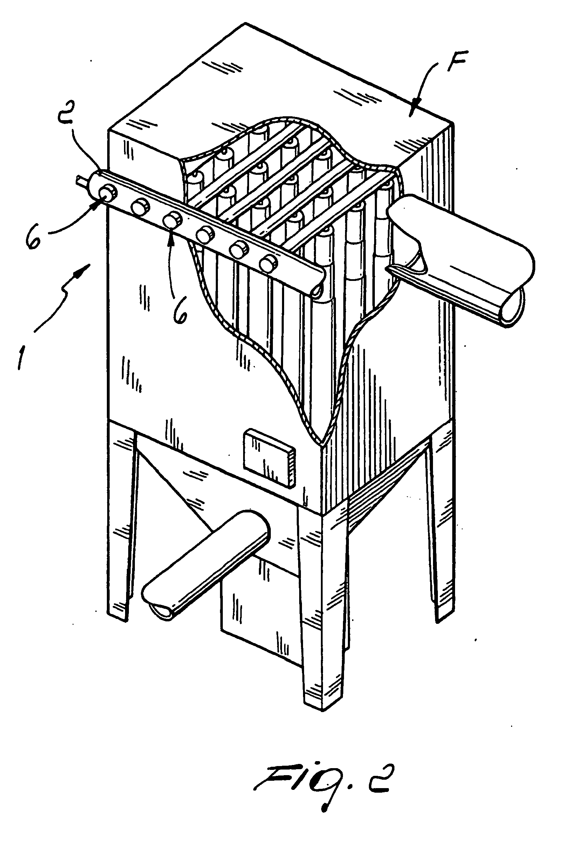

Figure 2 illustrates an assembly 1 in which the tank 2 is provided with a plurality of first and second openings 3 and 4, which are associated with corresponding ducts 5 connected to the filter F and each associated with respective valve means 6.

In said figure, the assembly 1 is applied to a filter F of the sleeve type, not shown in detail because it is of a conventional type; however, it is noted that the assembly 1 can be applied conveniently to other types of filter, such as for example cartridge or bag filters.

In practice it has been found that the described invention achieves the intended aim and objects.

In particular, the assembly according to the invention allows to reduce the manufacturing costs linked to the provision of the second opening on the pressurized gas tank.

The use of separate seals between the tank and the contoured annular element and between said annular element and the duct in fact allows to provide the second openings in the tank with tolerances that are not particularly low and therefore to use any hole production method.

The invention thus conceived is susceptible of numerous modifications and variations, all of which are within the scope of the appended claims.

All the details may further be replaced with other technically equivalent ones.

In practice, the materials used, as well as the shapes and the dimensions, may be any according to requirements without thereby abandoning the scope of the protection of the appended claims.

Where technical features mentioned in any claim are followed by reference signs, those reverence signs have been included for the sole purpose of increasing the intelligibility of the claims and accordingly such reference signs do not have any limiting effect on the interpretation of each element identified by way of example by such reference signs.

## Claims

1. A filter cleaning assembly (1), comprising:
a tank (2) for storing a pressurized gas, provided with an outer surface that is substantially convex and with at least one first opening (3) and at least one second opening (4);
at least one duct (5), which is at least partially inserted in said tank (2) and has a first end (5a), which is connected to said first opening (3) by interposing valve means (6) for the controlled dispensing of said pressurized gas, arranged externally to said tank (2), and a second end (5b), which protrudes from said second opening (4) and is associable with a filter (F);
a connecting body (7) for the hermetic connection of said valve means (6) and of said first end (5a), which is associated with the outer surface of said tank (2) by interposing first sealing means (8); and
a contoured annular element (11), which is fitted over said duct (5) at said second end (5b) and is associated with a sealing assembly (13, 14) that is provided between the outer surface of said tank (2) and said duct (5),
said filter cleaning assembly being **characterized in that** said sealing assembly comprises second sealing means (13), which are interposed between said contoured annular element (11) and the outer surface of said tank (2) proximate to the respective said second opening (4), and third sealing means (14), distinct from said second sealing means (13), which are interposed between said annular element (11) and said duct (5),
wherein each of said second (13) and third sealing means (14) comprises at least one sealing annular element (13, 14), and
wherein said contoured annular element (11) comprises an annular groove (15), which is provided at a distance from said duct (5) and the second opening (4) of said tank (2) and is arranged so as to face the outer surface of said tank (2) to accommodate the sealing annular element (13) of said second sealing means, and moreover comprises an annular seat (16), which is formed at the central hole of said contoured annular element (11) in order to accommodate the sealing annular element (14) of said third sealing means, and
**in that** said filter cleaning assembly further comprises fastening means (17, 18, 19) for fastening said contoured annular element (11) on said tank (2),
wherein said fastening means comprises a shoulder (18) that is rigidly coupled with said duct (5) for cooperating with the side, of said contoured annular element (11), opposite to the outer surface of said tank (2), and are associated with a threaded connection (7a) that is provided between said connecting body (7) and said first end (5a) of said duct (5).

2. The assembly according to claim 1, **characterized in that** said duct comprises a circumferential groove for accommodating said third sealing means (14) at the portion of said duct (5) that is arranged along the central hole of said contoured annular element (11).

3. The assembly according to claim 1 or 2, **characterized in that** said threaded connection comprises an internally threaded portion (7a) of said connecting body (7) which is coupled with a corresponding externally threaded portion, proximate to said first end (5a), of said duct (5).

4. The assembly according to claim 2, **characterized in that** a sealing annular element (9) is interposed between said internally threaded portion (7a) and said duct (5)

5. The assembly according to one or more of the preceding claims, **characterized in that** said shoulder is formed by a ring (18) that is associated with said duct (5).

6. The assembly according to one or more of the preceding claims, **characterized in that** said valve means (6) comprise a valve of the membrane type (6b).

7. The assembly according to one or more of the preceding claims, **characterized in that** it comprises actuation means for actuating the opening and closure of said valve means (6).

8. The assembly according to claim 7, **characterized in that** said actuation means are of a substantially electrical type.

9. The assembly according to claim 7, **characterized in that** said actuation means are of a substantially pneumatic type.

## Patentansprüche

1. Vorrichtung (1) zur Filterreinigung, aufweisend:
einen Behälter (2) zum Speichern eines Druckgases, der mit einer äußeren Oberfläche versehen ist, die im Wesentlichen konvex ist und mindestens eine erste Öffnung (3) und mindestens eine zweite Öffnung (4) besitzt;
mindestens einen Kanal (5), der mindestens teilweise in den Behälter (2) eingesteckt ist und ein erstes Ende (5a), das durch Zwischenschaltung von außerhalb des Behälters (2) angeordneten Ventileinrichtungen (6, 6a, 6b) zur kontrollierten Ausgabe des Druckgases mit der ersten Öffnung (3) verbunden ist, und ein zweites Ende (5b) besitzt, das aus der zweiten Öffnung (4) herausragt und mit einem Filter (F) verbindbar ist;
einen Verbindungskörper (7) für die hermetische Verbindung der Ventilvorrichtung (6) und des ersten Endes (5a), der durch Zwischenschaltung der ersten Dichtungseinrichtung (8) mit der äußeren Oberfläche des Behälters (2) verbunden ist, und
ein profiliertes ringförmiges Element (11), das über dem Kanal (5) am zweiten Ende (5b) befestigt ist und mit einer Dichtungsbaugruppe (13, 14) verbunden ist und das zwischen der äußeren Oberfläche des Behälters (2) und dem Kanal (5) vorgesehen ist,
**dadurch gekennzeichnet, dass** die Dichtungsbaugruppe eine zweite Dichtungseinrichtung (13), die zwischen das profilierte ringförmige Element (11) und die äußere Oberfläche des Behälters (2) nahe der betreffenden zweiten Öffnung (4) angeordnet ist, und eine dritte Dichtungseinrichtung (14) aufweist, die sich von der zweiten Dichtungseinrichtung (139 unterscheidet und die zwischen das ringförmige Element (11) und den Kanal (5) angeordnet ist,
die zweite (13) und die dritte (14) Dichtungseinrichtung jeweils mindestens ein ringförmiges Dichtungselement (13, 14) aufweisen und
wobei das profilierte ringförmige Element (11) eine ringförmige Nut (15) aufweiset, die in einem Abstand vom Kanal (5) und der zweiten Öffnung (4) des Behälters (2) vorgegehen ist und die so anbeordnet ist, dass sie der äußeren Oberfläche des Behälters (2) zugewandt ist, um die zweite Dichtungseinrichtung (13) aufzunehmen, und ferner
einen ringförmigen Sitz (16) aufweiset, der am mittigen Loch des ringförmigen Elements (11) gebildet ist, um das ringförmigen Dichtungselement (14) der dritten Dichtungseinrichtung auszunehmen, und
**dadurch**, dass die Vorrichtung (1) ferner Befestigungseinrichtungen (17, 18, 19) zum Befestigen des profilierten ringförmigen Elements (11) am Behälter (2) aufweist,
wobei die Befestigungseinrichtung eine Schulter (18), die mit dem Kanal (5) starr gekoppelt ist, um mit der Seite des profilierten ringförmigen Elements (11) zusammenzuwirken, die der äußeren Oberfläche des Behälters (2) gegenüberliegt , aufweist und mit einer Schraubverbindung (7a) verbunden ist, die zwischen dem Verbindungskörper (7) und dem ersten Ende (5a) des Kanals (5) vorgesehen ist.

2. Vorrichtung nach Anspruch 1, **dadurch gekennzeichnet, dass** der Kanal eine umfangsnut zum Aufnehmen der dritten Dichtungseinrichtung (14) an dem Teil des Kanals (5) aufweist, der entlang des mittigen Lochs des profilierten ringförmigen Elements (11) angeordnet ist.

3. Vorrichtung nach Anspruch 1 oder 2, **dadurch gekennzeichnet, dass** die Schraubverbindung einen Innengewindeteil (7a) des Verbindungskörpers (7) aufweist, der mit einem entsprechenden Außengewindeteil nahe dem ersten Ende (5a) des Kanals (5) gekoppelt ist.

4. Vorrichtung nach Anspruch 3, **dadurch gekennzeichnet, dass** ein ringförmiges Dichtungselement (9) zwischen den Innengewindeteil (7a) und den Kanal (5) geschaltet ist.

5. Vorrichtung nach einem oder mehreren der vorangegangenen Ansprüche, **dadurch gekennzeichnet, dass** die Schulter durch einen Ring (18) gebildet wird, der mit dem Kanal (5) verbunden ist.

6. Vorrichtung nach einem oder mehreren der vorangegangenen Ansprüche, **dadurch gekennzeichnet, dass** die Ventileinrichtung (6) ein Ventil in Membranausführung (6b) aufweist.

7. Vorrichtung nach einem oder mehreren der vorangegangenen Ansprüche, **dadurch gekennzeichnet, dass** sie eine Betätigungseinrichtung zum Öffnen und Schließen der Ventileinrichtung (6) aufweist.

8. Vorrichtung nach Anspruch 7, **dadurch gekennzeichnet, dass** die Betätigungseinrichtung eine im Wesentlichen elektrische Ausführung ist.

9. Vorrichtung nach Anspruch 7, **dadurch gekennzeichnet, dass** die Betätigungseinrichtung eine im Wesentlichen pneumatische Ausführung ist.

## Revendications

1. Groupe pour le nettoyage des filtres (1), comprenant :
un réservoir (2) pour le stockage d'un gaz pressurisé, pourvu d'une surface extérieure sensiblement convexe et pourvu d'au moins une première ouverture (3) et d'une deuxième ouverture (4) ;
au moins un conduit (5) qui est au moins partiellement inséré à l'intérieur dudit réservoir (2) et présente une première extrémité (5a) communicante avec ladite première ouverture (3) par l'interposition de moyens valvulaires (6) pour le débit contrôlé dudit gaz, disposés à l'extérieur dudit réservoir (2), et une deuxième extrémité (5b), saillante de ladite deuxième ouverture (4) et associable à un filtre (F) ;
un corps de raccord (7) pour la connexion étanche desdits moyens valvulaires (6) et de ladite première extrémité (5a), qui est associé à la surface extérieure dudit réservoir (2) par l'interposition de premiers moyens d'étanchéité (8) ; et
un élément annulaire façonné (11), inséré susdit conduit (5) en correspondance de ladite deuxième extrémité (5b) et est associé à un groupe d'étanchéité (13, 14) interposé entre la surface extérieure dudit réservoir (2) et ledit conduit (5),
ledit groupe pour le nettoyage des filtres ***caractérisé en ce que*** ledit groupe d'étanchéité comprend des deuxièmes moyens d'étanchéité (13), interposés entre ledit élément annulaire façonné (11) et la surface extérieure dudit réservoir (2) en proximité de ladite deuxième ouverture (4), et des troisièmes moyens d'étanchéité (14), distincts par rapport aux deuxièmes moyens d'étanchéité (13), interposés entre ledit élément annulaire façonné (11) et ledit conduit (5),
où chacun desdits deuxièmes (13) et troisièmes moyens d'étanchéité (14) comprend au moins un élément annulaire façonné d'étanchéité (13, 14), et
où ledit élément annulaire façonné (11) comprend une rainure annulaire (15), pourvue en proximité dudit conduit (5) et de la deuxième ouverture (4) dudit réservoir (2) et qui est disposée en donnant sur la surface extérieure dudit réservoir (2) pour le logement de l'élément d'étanchéité annulaire (13) desdits deuxièmes moyens d'étanchéité, et comprend en outre un logement annulaire (16), formé en correspondance du trou central dudit élément annulaire (11) pour le logement de l'élément d'étanchéité annulaire (14) desdits troisièmes moyens d'étanchéité, et
***en ce que*** ledit groupe pour le nettoyage des filtres comprend en outre des moyens de serrage (17, 18, 19) pour serrer ledit élément annulaire façonné (11) sur ledit réservoir (2),
où lesdits moyens de serrage comprennent un épaulement (18) rigidement accouplé avec ledit conduit (5) pour coopérer avec le coté, dudit élément annulaire façonné (11), opposé à la surface extérieure dudit réservoir (2), et sont associés à un raccord fileté (7a) pourvu entre ledit corps de raccord (7) et la première extrémité (5a) dudit conduit (5).

2. Groupe selon la revendication 1, ***caractérisé en ce que*** ledit conduit comprend une gorge circonférentielle pour le logement desdits troisièmes moyens d'étanchéité (14) en correspondance de la portion dudit conduit (5) disposé le long du trou central dudit élément annulaire façonné (11).

3. Groupe selon la revendication 1 ou 2, ***caractérisé en ce que*** ledit raccord fileté comprend une portion filetée intérieure (7a) dudit corps de raccord (7) qui est accouplée avec une correspondante portion filetée extérieure, en proximité de ladite première extrémité (5a) dudit conduit (5).

4. Groupe selon la revendication 3, ***caractérisé en ce que*** un élément annulaire d'étanchéité (9) est interposé entre ladite portion filetée intérieure (7a) et ledit conduit (5).

5. Groupe selon l'une ou plusieurs des revendications précédentes, ***caractérisé en ce que*** ledit épaulement est formé par un écrou (18) qui est associé audit conduit (5).

6. Groupe selon l'une ou plusieurs des revendications précédentes, ***caractérisé en ce que*** lesdits moyens valvulaires (6) comprennent une vanne du type à membrane (6b).

7. Groupe selon l'une ou plusieurs des revendications précédentes, ***caractérisé en ce qu*'**il comprend des moyens actionneurs pour l'ouverture et la fermeture desdits moyens valvulaires (6).

8. Groupe selon la revendication 7, ***caractérisé en ce que*** lesdits moyens actionneurs sont du type sensiblement électrique.

9. Groupe selon la revendications 7, ***caractérisé en ce que*** lesdits moyens actionneurs sont du type sensiblement pneumatique.
